# DEMANDE DE BREVET EUROPEEN

(11) **EP 1 156 304 A1**
(43) Date de publication de la demande: **21.11.2001**
(21) Numéro de dépôt: 01401256.1
(22) Date de dépôt: 15.05.2001
(51) Int. Cl.: G01F 23/292, G01N 21/90

(54) **Dispositif d'inspection à distance de l'intérieur d'une cuve de citerne**

(30) Priorité: 16.05.2000 FR 0006230
(71) Demandeur: General Trailers France, 91130 Ris Orangis (FR)
(72) Inventeur: Lesieur, Claude, 91042 Evry cedex (FR)
(74) Mandataire: Michelet, Alain

(57) **Abrégé**

L'invention concerne un dispositif d'inspection à distance de l'intérieur d'une cuve opaque de citerne. Ce dispositif comprend:
- un élément de visualisation fixe, étanche et transparent (3) agencé à une partie supérieure de la cuve (2) et dont les dimensions et le positionnement sont tels à offrir un champ de vision (V1, V2) dans la cuve (2),
- une source de lumière indépendante (4) apte à éclairer l'intérieur de la cuve (2) au travers d'une zone d'ouverture étanche (5) pratiquée sur la cuve,
- un capteur de lumière (6) disposé au regard de l'élément de visualisation (3) apte à visualiser l'intérieur de la cuve (2),
- une interface de visualisation (7) recevant le signal émis par le capteur (6) et renvoyant une image de l'intérieur de la cuve (2) visible à distance par un opérateur (8) situé à l'extérieur de celle-ci et demeurant au sol (S).

## Description

La présente invention concerne un dispositif d'inspection à distance de l'intérieur d'une cuve opaque de citerne.

Le dispositif de l'invention permet de visualiser l'intérieur de la cuve, mesurer les volumes de liquide contenus dans celle-ci, contrôler la vacuité, contrôler l'état général interne et s'applique à tout type de citerne, quel que soit le produit contenu pourvu que ce dernier soit décelable visuellement.

De façon particulière, l'invention s'applique aux citernes destinées au transport d'hydrocarbures, produits en général hautement volatils et inflammables. Habituellement, une telle inspection s'effectue en grimpant sur la citerne, par une échelle latérale par exemple, et en ouvrant une trappe de visite ou un orifice quelconque destiné à cet usage.

II va sans dire que cela est dangereux à double titre, car l'opérateur est d'abord obligé de se hisser au-dessus de la cuve pour inspecter celle-ci et ensuite il est obligé d'ouvrir une trappe et de s'exposer ainsi aux émanations nuisibles à la santé. De plus, il doit emmener avec lui et manipuler une source lumineuse pour éclairer l'intérieur de la cuve.

Par ailleurs, il semble évident qu'une telle façon d'inspecter une citerne ou les cuves d'une citerne est acceptable lorsqu'il s'agit d'en inspecter une citerne ou éventuellement deux. Par contre, lorsqu'il s'agit d'inspecter plusieurs citernes, par exemple les citernes réunies au dépôt du transporteur, le temps de monter sur et de redescendre de chaque citerne constitue, cumulé sur l'ensemble des citernes à inspecter, un temps non productif considérable que le transporteur pourrait éviter.

Le but de la présente invention est de remédier à ces inconvénients. A cet effet, le dispositif doit permettre d'inspecter la cuve directement, c'est-à-dire sans ouverture d'une trappe ou d'un orifice quelconque et cela quelle que soit la luminosité extérieure, par exemple de nuit, et aussi sans perte de vapeur dans l'atmosphère et en toute sécurité pour l'opérateur en lui évitant non seulement d'être au contact des vapeurs avec les risques que cela comporte, mais également en lui évitant de grimper sur le sommet de la cuve.

La présente invention atteint ces différents objectifs avec un dispositif d'inspection à distance de l'intérieur d'une cuve opaque de citerne qui comprend un élément de visualisation fixe, étanche et transparent, agencé à une partie supérieure de la cuve et dont les dimensions et le positionnement sont tels à offrir un champ de vision dans la cuve, apte à permettre des contrôles tels que, par exemple, le contrôle de la vacuité de ladite cuve, le contrôle de son état général, la mesure du volume contenu, et la détection de corps étrangers en son intérieur, une source de lumière indépendante apte à éclairer l'intérieur de la cuve au travers d'une zone d'ouverture étanche pratiquée sur la cuve, un capteur de lumière disposé au regard de l'élément de visualisation apte à visualiser l'intérieur de la cuve, et une interface de visualisation recevant le signal émis par le capteur et renvoyant une image de l'intérieur de la cuve visible à distance par un opérateur situé à l'extérieur de celle-ci et demeurant au sol.

Le dispositif d'inspection permet ainsi, entre autres possibilités, de détecter des corps étrangers, se trouvant dans la partie basse de la cuve comportant un ou plusieurs obturateurs internes constituant autant de points de vidange du produit contenu.

La présente invention concerne également les caractéristiques qui ressortiront au cours de la description qui va suivre et qui devront être considérées isolément ou selon toutes leurs combinaisons techniquement possibles.

Cette description donnée à titre d'exemple non limitatif, fera comprendre comment l'invention peut être réalisée, en référence aux dessins annexés sur lesquels:
La Figure 1 est une vue schématique d'une section transversale de cuve équipée d'un dispositif d'inspection selon un premier exemple de réalisation, et
La Figure 2 est une vue schématique d'une section transversale de cuve équipée d'un dispositif d'inspection selon un second exemple de réalisation.

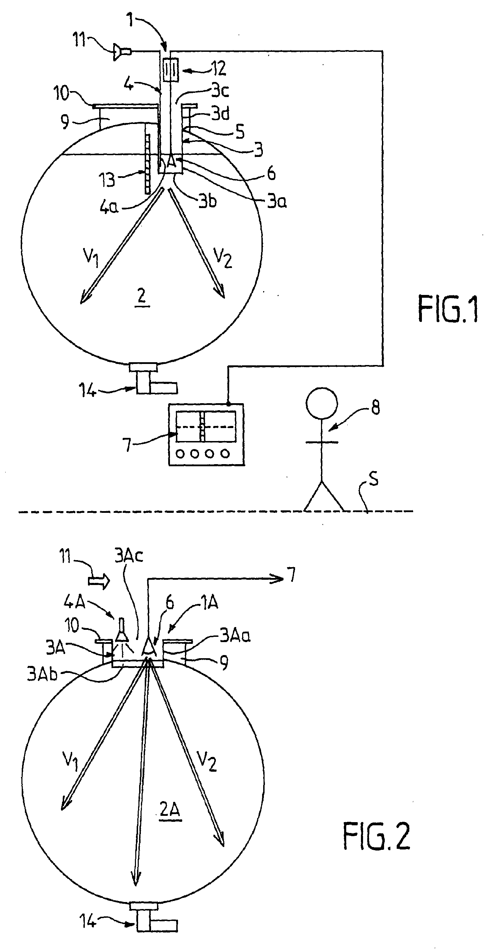

Le dispositif d'inspection à distance, globalement désigné sur la Figure 1 en 1, est destiné à l'inspection de l'intérieur d'une cuve opaque 2 d'une citerne.

Selon l'invention, il est constitué par:
- un élément de visualisation fixe, étanche et transparent 3 agencé à une partie supérieure de la cuve 2 et dont les dimensions et le positionnement sont tels à offrir un champ de vision V1à V2 dans la cuve 2,
- une source de lumière indépendante 4 apte à éclairer l'intérieur de la cuve 2 au travers d'une zone d'ouverture étanche 5 pratiquée sur la cuve 2,
- un capteur de lumière 6 disposé au regard de l'élément de visualisation 3 apte à visualiser l'intérieur de la cuve 2, et
- une interface de visualisation 7 recevant le signal émis par le capteur 6 et renvoyant une image de l'intérieur de la cuve 2, visible à distance par un opérateur 8 situé à l'extérieur de celle-ci et demeurant au sol.

L'interface de visualisation 7 pourra par exemple être constituée par un écran.

D'une manière générale, l'élément de visualisation 3 est constitué par un corps tubulaire borgne 3a dont au moins son extrémité fermée 3b est transparente, cette dernière étant dirigée vers l'intérieur de la cuve 2 alors que son extrémité opposée 3c débouche au-dessus de la cuve 2 pour définir dans celle-ci un logement étanche accessible librement de l'extérieur et apte à recevoir la source lumineuse 4 et le capteur de lumière 6.

Selon un premier exemple d'application représenté à la Figure 1, le corps tubulaire borgne constituant un élément de visualisation 3 est transparent de tout côté et est immergé dans la cuve 2 selon une profondeur prédéterminée. Selon ce même exemple de réalisation, le corps tubulaire borgne 3a comporte une partie 3d externe à la cuve, traversant un dôme 9 réalisé sur le sommet de la cuve 2 et débouchant d'un plateau supérieur 10 dudit dôme 9.

De manière optionnelle, la source de lumière 4 est une fibre optique alimentée par un générateur de lumière 11 et dont une extrémité 4a est insérée dans le corps tubulaire borgne 3 de l'élément de visualisation 3, pour éclairer l'intérieur de la cuve 2. Bien entendu, cette source de lumière 4 pourrait être remplacée par une torche permettant de s'affranchir de tout système de transmission de la lumière ainsi que du générateur.

La source de lumière 4 peut être reliée à un système d'asservissement permettant, à distance, de varier l'orientation de la source de lumière.

Egalement de manière optionnelle, le capteur de lumière 6 est un capteur à infrarouge inséré dans le corps tubulaire borgne 3a constituant l'élément de visualisation 3 pour visualiser l'intérieur de la cuve 2 et convertir l'image perçue en un signal électrique, optique ou électromagnétique.

Ce capteur peut être intégré au, ou être indépendant du, dispositif.

Selon une autre variante de l'invention, le dispositif comporte un système d'asservissement 12 du capteur 6, piloté manuellement depuis l'extérieur de la cuve 2 par un opérateur 8 situé à distance, afin de modifier l'orientation dudit capteur 6 et obtenir ainsi différents angles de prise de vue de l'intérieur de la cuve 2.

Selon une autre caractéristique de l'invention, la position du dispositif 1 dans la cuve 2 est relative à un réglet 12 ou tout autre instrument gradué, fixé de façon inamovible et sécurisée dans la cuve 2, de manière à déterminer le volume de liquide restant dans la cuve 2 grâce à un barème préétabli permettant de convertir en volume la valeur de la hauteur dudit liquide présent dans la cuve 2 et lue sur le réglet 13.

Selon encore une autre variante, le dispositif comprend des moyens permettant de varier la taille du champ de vision. Une telle variation peut aller dans deux sens. Le premier est celui d'un agrandissement de l'image obtenu par un zoom numérique optique ou par tout autre moyen permettant de régler la taille de l'image et d'affiner celle-ci sur l'interface 7. Le second sens est celui d'une réduction de la taille de l'image moyennant une optique à très grand angle variable. Cette disposition permet de varier la taille du champ de vision à partir d'un champ de vision initial de façon à voir l'intérieur de la cuve à inspecter, sur une même image, soit dans son intégralité soit en partie et dans ce dernier cas à différentes échelles.

Afin de s'affranchir du pilotage du capteur 6, des vues sont enregistrées selon des orientations dudit capteur 6 et des niveaux de zoom prédéterminés et préenregistrés par l'utilisateur.

Le dispositif d'inspection 1A représenté sur la Figure 2 diffère essentiellement du précédent en ce que l'élément de visualisation 3a, bien qu'également constitué par un corps tubulaire borgne, n'est pas immergé dans la cuve 2A. Néanmoins, sa face d'extrémité fermée 3Ab est bien transparente et dirigée vers l'intérieur de la cuve 2A. Cette face d'extrémité 3Ab est située en fait au niveau de la paroi de la cuve 2A.

Comme précédemment, la partie opposée 3Ac à l'extrémité fermée 3Ab de l'élément de visualisation 3A traverse un dôme 9 réalisé sur le sommet de la cuve 2A et débouche d'un plateau supérieur 10 dudit dôme 9.

Selon le présent exemple, on voit que la source lumineuse 4, qui était constituée par une fibre optique dans le cas précédent, est ici remplacée par une torche ou baladeuse amovible.

Néanmoins, comme précédemment, le capteur de lumière 6 est relié à l'interface de visualisation 7. Dans le cas d'une cuve à plusieurs compartiments étanches, il est possible de réaliser une interface de visualisation 7 par compartiment ou une interface de visualisation destiné à plusieurs compartiments permettant de visualiser chacun de ces compartiments dans un ordre donné ou selon une commande effectuée par l'opérateur.

Eventuellement, l'image visible sur l'interface de visualisation pourrait être en couleur permettant ainsi de déterminer la nature du liquide si celui-ci est coloré, ou de mieux distinguer certains détails. En variante, la source lumineuse peut elle-même être conçue de façon à émettre de la lumière en différentes couleurs, ces couleurs pouvant être sélectionnées par l'opérateur. Si la source lumineuse est constituée par des fibres optiques reliées à un générateur de lumière, ce dernier peut être conçu de façon à émettre de la lumière en différentes couleurs selon une commande préenregistrée en mémoire ou manuelle.

Par ailleurs, le générateur de lumière 11, le capteur 6, l'interface 7, ainsi que tout autre équipement ou câble alimenté électriquement est avantageusement d'un niveau de sécurité (étanchéité, anti-déflagration...) propre à rendre l'ensemble du système utilisable en zone dangereuse par exemple dans une aire de stockage d'hydrocarbure.

Il est également possible, suivant les besoins de l'application, d'ajouter un ou plusieurs capteurs 6 ainsi qu'un ou plusieurs éléments de visualisation transparents 3, de forme diverse, afin par exemple d'augmenter le champ visuel à l'intérieur de la cuve 2. C'est ainsi que l'élément de visualisation pourra être de forme ovale.

Avantageusement, cet élément de visualisation sera positionné judicieusement sur la cuve et il sera réalisé dans un matériau compatible avec le produit stocké et avec son environnement extérieur.

Selon un mode de réalisation particulier de l'invention, le dispositif d'inspection peut être réalisé sous la forme d'un portique sous lequel un véhicule-citerne dont la citerne est à inspecter, passe tout en s'arrêtant dans des positions préétablies pour faire effectuer automatiquement l'inspection.

## Revendications

1. Dispositif d'inspection à distance de l'intérieur d'une cuve opaque de citerne, **caractérisé en ce qu'**il est constitué:
• d'un élément de visualisation fixe, étanche et transparent (3) agencé à une partie supérieure de la cuve (2) et dont les dimensions et le positionnement sont tels à offrir un champ de vision (V1, V2) dans la cuve (2), apte à permettre des contrôles tels que le contrôle de la vacuité de ladite cuve (2), et/ou le contrôle de son état général et/ou la mesure du volume contenu, et/ou la détection de corps étrangers en son intérieur,
• d'une source de lumière indépendante (4, 4A) apte à éclairer l'intérieur de la cuve (2, 2A) au travers d'une zone d'ouverture étanche (5) pratiquée sur la cuve,
• d'un capteur de lumière (6) disposé au regard de l'élément de visualisation (3) apte à visualiser l'intérieur de la cuve (2, 2A),
• d'une interface de visualisation (7) recevant le signal émis par le capteur (6) et renvoyant une image de l'intérieur de la cuve (2, 2A) visible à distance par un opérateur (8) situé à l'extérieur de celle-ci et demeurant au sol S.

2. Dispositif selon la revendication 1, **caractérisé en ce que** l'élément de visualisation (3, 3A) est constitué par un corps tubulaire borgne (3a, 3Aa) dont au moins son extrémité fermée (3b, 3Ab) est transparente, cette dernière au moins étant dirigée vers l'intérieur de la cuve (2, 2A) alors que son extrémité opposée (3c, 3Ac) débouche au-dessus de la cuve (2, 2A) pour définir, dans ou sur celle-ci, un logement étanche accessible librement de l'extérieur et apte à recevoir la source lumineuse (4, 4A) et le capteur de lumière (6).

3. Dispositif selon la revendication 2, **caractérisé en ce que** le corps tubulaire borgne constituant l'élément de visualisation (3) est transparent de tout côté et est immergé dans la cuve (2) selon une profondeur prédéterminée.

4. Dispositif selon l'une des revendications 2 ou 3, **caractérisé en ce que** le corps tubulaire borgne (3a) comporte une partie externe (3d) traversant un dôme (9) réalisé sur le sommet de la cuve (2) et débouchant d'un plateau supérieur (10) dudit dôme (9).

5. Dispositif selon l'une des revendications précédentes, **caractérisé en ce que** la source de lumière (4) est une fibre optique alimentée par un générateur de lumière (11) et dont une extrémité (4a) est insérée dans le corps tubulaire borgne (3a) constituant l'élément de visualisation (3) pour éclairer l'intérieur de la cuve (2).

6. Dispositif selon l'une des revendications précédentes, **caractérisé en ce que** le capteur de lumière (6) est un capteur à infrarouge inséré dans le corps tubulaire borgne (3a) constituant l'élément de visualisation (3) pour visualiser l'intérieur de la cuve (2) et convertir l'image perçue en un signal électrique, optique ou électromagnétique.

7. Dispositif selon l'une des revendications précédentes, **caractérisé en ce qu'**il comporte un système d'asservissement (12) du capteur (6) piloté manuellement depuis l'extérieur de la cuve (2) par un opérateur (8) situé à distance, afin de modifier l'orientation dudit capteur (6) et obtenir ainsi différents angles de prise de vue de l'intérieur de la cuve (2).

8. Dispositif selon l'une des revendications précédentes, **caractérisé en ce que** sa position dans la cuve (2) est relative à un réglet (13) ou tout instrument gradué, fixé de façon inamovible et sécurisée dans la cuve (2) de manière à déterminer le volume de liquide restant dans la cuve (2) grâce à un barème préétabli permettant de convertir en volume la valeur de la hauteur dudit liquide présentant dans la cuve (2) et lue sur le réglet 13.

9. Dispositif selon l'une des revendications précédentes, **caractérisé en ce qu'**il comprend en outre, un zoom numérique optique ou de tout autre type permettant le réglage de la taille de l'image et d'affiner celle-ci sur l'interface 7.

10. Dispositif selon l'une des revendications précédentes, **caractérisé en ce qu'**afin de s'affranchir du pilotage du capteur (6), des vues sont enregistrées selon des orientations dudit capteur (6) et des niveaux de zoom prédéterminés et préenregistrés par l'utilisateur (8).

11. Dispositif selon l'une des revendications précédentes, **caractérisé en ce qu'**il est réalisé sous la forme d'un portique sous lequel un véhicule-citerne passe en s'arrêtant dans des positions préétablies pour l'inspection.
